# EUROPEAN PATENT APPLICATION

(11) **EP 3 103 837 A1**
(43) Date of publication of application: **14.12.2016**
(21) Application number: 15746834.9
(22) Date of filing: 05.02.2015
(51) Int. Cl.: C08L 33/12, B29C 55/02, C08L 69/00, G02B 5/30, B29K 33/04, B29K 69/00, B29L 7/00, B29L 11/00

(54) **RESIN COMPOSITION AND MOLDED ARTICLE THEREOF**

(30) Priority: 06.02.2014 JP 2014021066
(71) Applicant: Sumitomo Chemical Company, Limited, Tokyo 104-8260 (JP)
(72) Inventor: DAIMATSU, Kazuki, Niihama-shi Ehime 792-8521 (JP); NAKAHARA, Ryo, Niihama-shi Ehime 792-8521 (JP)
(74) Representative: Vossius & Partner Patentanwälte Rechtsanwälte mbB
(86) International application number: PCT/JP2015/053301
(87) International publication number: WO 2015/119218

(57) **Abstract**

An object of the present invention is to provide a resin composition which hardly makes the resulting molded article cloudy even when a heating temperature at molding is higher, as well as a resin film obtained by molding the composition and a stretched film obtained by stretching the resin film, and there is provided a resin composition comprising a methacrylic resin and an aromatic polycarbonate resin, wherein the methacrylic resin is a resin obtained by polymerizing a monomer component comprising 59 to 90% by weight of methyl methacrylate, 10 to 40% by weight of a (meth)acrylic acid ester represented by formula (1), and 0.4 to 0.8% by weight of an alkyl alkylate, based on 100% by weight of the total of the monomer component, a weight average molecular weight of the aromatic polycarbonate resin is 20,000 to 40,000, and the content of the methacrylic resin is 50 to 95 parts by weight, and the content of the aromatic polycarbonate resin is 5 to 50 parts by weight, based on 100 parts by weight of the total of the methacrylic resin and the aromatic polycarbonate resin.

## Description

### TECHNICAL FIELD

The present application claims the priority under the Paris Convention based on Japanese patent application No. 2014-21066, entirety of which is incorporated herein by reference.

The present invention relates to a resin composition containing a methacrylic resin and a polycarbonate resin. The present invention also relates to a molded article and a resin film obtained by molding this resin composition, and a stretched film obtained by stretching this resin film. The present invention also relates to a polarizer protection film comprising a resin film or a stretched film. The present invention further relates to a polarizing plate comprising a polarizer and a polarizer protection film.

### BACKGROUND ART

An aromatic polycarbonate resin generally has good high temperature stability, dimensional stability, impact resistance, rigidity, and transparency. It is however insufficient in scratch resistance and long term UV resistance, and also has a defect of generation of stress birefringence. Meanwhile, a methacrylic resin is known to have good transparency, surface hardness, UV resistance, weather resistance and chemical resistance. It is however insufficient in dimensional stability, impact resistance, and low temperature resistance.

Accordingly, a resin composition containing the aromatic polycarbonate resin and the methacrylic resin is expected to make up for defects which are individually, possessed by respective components, resulting in a material which is usable in a variety of uses. The resin composition containing the aromatic polycarbonate resin and the methacrylic resin is however opaque, and has a problem that it cannot be used for a purpose requiring transparency. Then, in order to obtain a transparent resin composition containing the aromatic polycarbonate resin and the methacrylic resin, a method using a methacrylic resin comprising a specified monomer component as the methacrylic resin has been proposed.

For example, Patent Document 1 describes a resin composition containing an aromatic polycarbonate resin, and a methacrylic resin which is obtained by polymerizing 5 to 95% by weight of a methyl methacrylate monomer unit, 5 to 95% by weight of a methacrylic acid ester monomer unit having a carbocyclic group on an ester group and 0 to 40% by weight of an α,β-unsaturated monomer unit.

### PRIOR ART DOCUMENT

### PATENT DOCUMENT

Patent Document 1: JP-A-01-1749

### SUMMARY OF THE INVENTION

### PROBLEMS TO BE SOLVED BY THE INVENTION

A resin composition containing an aromatic polycarbonate resin and a methacrylic resin usually has a nature that it becomes cloudy when heated to a certain temperature or higher (referred to as LCST behavior in some cases). In the resin composition described in Patent Document 1, this temperature at which the resin becomes cloudy (i.e. clouding point) can be below a temperature range which is usually set in a molding method for molding the resin composition, such as an injection molding method, a press molding method and a melt extrusion molding method. For this reason, if the resin composition is molded in the molding method, the resulting molded article can become cloudy, and opaque.

An object of the present invention is to provide a resin composition capable of providing a molded article which is suppressed from generation of clouding and which has improved transparency.

### SOLUTIONS TO THE PROBLEMS

In order to solve the object, the present inventors intensively made study, and as a result, found out a solving means comprising the following constituent features, resulting in completion of the present invention.
<1> A resin composition comprising a methacrylic resin and an aromatic Polycarbonate resin,
   wherein the methacrylic resin is a resin obtained by polymerizing a monomer component comprising 69 to 85% by weight of methyl methacrylate, 10 to 40% by weight of a (meth)acrylic acid ester represented by the following formula (I): 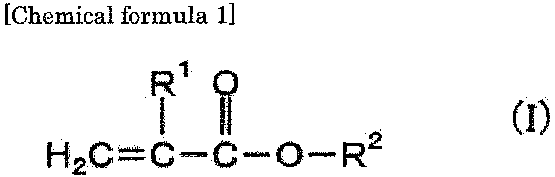 wherein R¹ represents a hydrogen atom or a methyl group, and R² represents an alkyl group substituted with a cycloalkyl group, a cycloalkyl group, a cycloalkyl group substituted with an alkyl group, an alkyl group substituted with a phenyl group, a phenyl group, a phenyl group substituted with an alkyl group, an alkyl group substituted with a naphthyl group, a naphthyl group, a naphthyl group substituted with an alkyl group, a dicyclopentanyl group or a dicyclopentenyl group, and 0.4 to 0.8% by weight of an alkyl acrylate, based on 100% by weight of the total of the monomer component,
   the weight average molecular weight of the aromatic polycarbonate resin is 20000 to 60000, and
   the content of the methacrylic resin is 50 to 95 parts by weight, and the content of the aromatic polycarbonate resin is 5 to 50 parts by weight, based on 100 parts by weight of the total of the methacrylic resin and the aromatic polycarbonate resin.
<2> The resin composition according to <1>, wherein the (meth)acrylic acid ester represented by the formula (I) is at least one selected from the group consisting of cyclohexyl methacrylate, benzyl methacrylate, phenyl methacrylate and naphthyl methacrylate.
<3> The resin composition according to <1> or <2>, wherein the alkyl acrylate is at least one selected from the group consisting of methyl acrylate, ethyl acrylate and butyl acrylate.
<4> A molded article obtained by molding the resin composition according to any one of <1> to <3>.
<5> A resin film obtained by molding the resin composition according to any one of <1> to <3>.
<6> A stretched film obtained by stretching the resin film according to <5>.
<7> A polarizer protection film comprising the resin film according to <5>.
<8> A polarizer protection film comprising the stretched film according to <6>.
<9> A polarizing plate comprising a polarizer, and the polarizer protection film according to <7> or <8> to be disposed on at least one surface of the polarizer.

### EFFECTS OF THE INVENTION

According to the present invention, there is obtained a resin composition which is capable of providing a molded article which is suppressed from generation of clouding and which has an improved transparency. According to the present invention, there are further obtained a molded article and a resin film obtained by molding this resin composition, and a stretched film obtained by stretching this resin film.

By molding the resin composition of the present invention, there are obtained a molded article and a resin film which are suppressed from generation of clouding and which have an improved transparency.

### EMBODIMENTS OF THE INVENTION

The resin composition of the present invention comprises a specified methacrylic resin and a specified polycarbonate resin at a prescribed ratio.

### <Methacrylic resin>

The methacrylic resin to be used in the present invention is a resin obtained by polymerizing a monomer component comprising 59 to 90% by weight of methyl methacrylate, 10 to 40% by weight of a (meth)acrylic acid ester represented by the following formula (I): 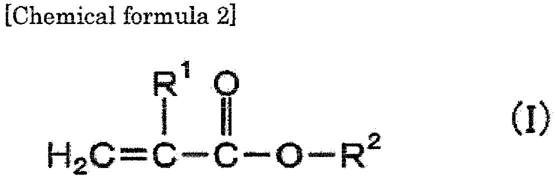 wherein R¹ represents a hydrogen atom or a methyl group, and R² represents an alkyl group substituted with a cycloalkyl group, a cycloalkyl group, a cycloalkyl group substituted with an alkyl group, an alkyl group substituted with a phenyl group, a phenyl group, a phenyl group substituted with an alkyl group, an alkyl group substituted with a naphthyl group, a naphthyl group, a naphthyl group substituted with an alkyl group, a dicyclopentanyl group or a dicyclopentenyl group,
and 0.4 to 0.8% by weight of an alkyl acrylate, based on 100% by weight of the total of the monomer component.

As used herein, the term "(meth)acryl" means "acryl" or "methacryl".

As methyl methacrylate, a commercially available product may be used as it is, or methyl methacrylate which has specially been synthesized according to a previously publicly-known method may be used.

Methyl methacrylate is contained at a ratio of 59 to 90% by weight, preferably at a ratio of 65 to 85% by weight, based on 100% by weight of the total of the monomer component constituting the methacrylic resin, from a viewpoint that transparency and weather resistance of the methacrylic resin become good.

In the formula (I), R¹ represents a hydrogen atom or a methyl group, and is preferably a methyl group.

The (meth)acrylic acid ester represented by the formula (I) has at least one alicyclic hydrocarbon group or aromatic hydrocarbon group. As the (meth)acrylic acid ester, a commercially available product may be used as it is, or a (meth)acrylic acid ester which has specially been synthesized by a previously publicly-known method may be used.

In the formula (I), R² represents an "alkyl group substituted with a cycloalkyl group", a "cycloalkyl group", a "cycloalkyl group substituted with an alkyl group", an "alkyl group substituted with a phenyl group", a "phenyl group", a "phenyl group substituted with an alkyl group", an "alkyl group substituted with a naphthyl group", a "naphthyl group", a "naphthyl group substituted with an alkyl group", a "dicyclopentanyl group" or a "dicyclopentenyl group".

As the "alkyl group" of the "alkyl group substituted with a cycloalkyl group" represented by R², an alkyl group having 1 to 4 carbon atoms is preferable, and examples thereof include a methyl group, an ethyl group, a n-propyl group, an isopropyl group, a n-butyl group, an isobutyl group, and a tert-butyl group. As the "cycloalkyl group" which is the substituent of that alkyl group, a cycloalkyl group having 5 to 12 carbon atoms is preferable, and examples thereof include a cyclopentyl group, a cyclohexyl group, a cyclobutyl group, a cyclooctyl group, and a cyclododecyl group. The number of the "cycloalkyl group" which is a substituent, and the substitution position in that alkyl group are not particularly limited. Examples of the "alkyl group substituted with a cycloalkyl group" represented by R¹ include a methyl group, an ethyl group, a n-propyl group, an isopropyl group, a n-butyl group, an isobutyl group, and a tert-butyl group, in which at least one hydrogen atom (H) of each group is substituted with the cycloalkyl group having 5 to 12 carbon atoms.

As the "cycloalkyl group" represented by R², a cycloalkyl group having 5 to 12 carbon atoms is preferable, and examples thereof include a cyclopentyl group, a cyclohexyl group, a cyclobutyl group, a cyclooctyl group, and a cyclododecyl group. Those groups may be further substituted with a substituent such as a hydroxy group, an amino group, and a sulfone group, as necessary.

As the "cycloalkyl group" of the "cycloalkyl group substituted with an alkyl group" represented by R², a cycloalkyl group having 5 to 12 carbon atoms is preferable, and examples thereof include a cyclopentyl group, a cyclohexyl group, a cyclobutyl group, a cyclooctyl group, and a cyclododecyl group. As the "alkyl group" which is the substituent of that cycloalkyl group, an alkyl group having 1 to 4 carbon atoms is preferable, and examples thereof include a methyl group, an ethyl group, a n-propyl group, an isopropyl group, a n-butyl group, an isobutyl group, and a tert-butyl group. The number of the "alkyl group" which is a substituent, and the substitution position in that cycloalkyl group are not particularly limited. Examples of the "cycloalkyl group substituted with an alkyl group" represented by R¹ include a cyclopentyl group, a cyclohexyl group, a cyclobutyl group, a cyclooctyl group, and a cyclododecyl group, in which at least one hydrogen atom (H) of each group is substituted with the alkyl group having 1 to 4 carbon atoms.

As the "alkyl group" of the "alkyl group substituted with a phenyl group" represented by R², an alkyl group having 1 to 4 carbon atoms is preferable, and examples thereof include a methyl group, an ethyl group, a n-propyl group, an isopropyl group, a n-butyl group, an isobutyl group, and a tert-butyl group. The number of the "phenyl group" which is a substituent, and the substitution position in that alkyl group are not particularly limited. Examples of the "alkyl group substituted with a phenyl group" represented by R¹ include a methyl group, an ethyl group, a n-propyl group, an isopropyl group, a n-butyl group, an isobutyl group, and a tert-butyl group, in which at least one hydrogen atom (H) of each group is substituted with a phenyl group (e.g. benzyl group, phenethyl group, etc.).

The "phenyl group" represented by R² is not particularly limited, and may be further substituted with a substituent such as a hydroxy group, an amino group, and a sulfone group.

As the "alkyl group" which is the substituent of the phenyl group of the "phenyl group substituted with an alkyl group" represented by R², an alkyl group having 1 to 4 carbon atoms is preferable, and examples thereof include a methyl group, an ethyl group, a n-propyl group, an isopropyl group, a n-butyl group, an isobutyl group, and a tert-butyl group. The number of the "alkyl group" which is a substituent, and the substitution position in that phenyl group are not particularly limited. Examples of the "phenyl group substituted with an alkyl group" represented by R¹ include an o-tolyl group, a m-tolyl group, and a p-tolyl group.

As the "alkyl group" of the "alkyl group substituted with a naphthyl group" represented by R², an alkyl group having 1 to 4 carbon atoms is preferable, and examples thereof include a methyl group, an ethyl group, a n-propyl group, an isopropyl group, a n-butyl group, an isobutyl group, and a tert-butyl group. The number of the "naphthyl group" which is a substituent, and the substitution position in that alkyl group are not particularly limited. Examples of the "alkyl group substituted with a naphthyl group" represented by R¹ include a methyl group, an ethyl group, a n-propyl group, an isopropyl group, a n-butyl group, an isobutyl group, and a tert-butyl group, in which at least one hydrogen atom (H) of each group is substituted with a naphthyl group (e.g. 1-naphthylmethyl group, 2-naphthylmethyl group, 1-naphthylmethyl group, 2-naphthylethyl group etc.).

The "naphthyl group" represented by R² is not particularly limited, and may be further substituted with a substituent such as a hydroxy group, an amino group and a sulfone group.

As the "alkyl group" which is the substituent of the naphthyl group of the "naphthyl group substituted with an alkyl group" represented by R², an alkyl group having 1 to 4 carbon atoms is preferable, and examples thereof include a methyl group, an ethyl group, a n-propyl group, an isopropyl group, a n-butyl group, an isobutyl group, and a tert-butyl group. The number of the "alkyl group" which is a substituent, and a substitution position in the naphthyl group are not particularly limited. Examples of the "naphthyl group substituted with an alkyl group" represented by R¹ include a methylnaphthyl group, and an ethylnaphthyl group.

The "dicyclopentanyl group" and the "dicyclopentenyl group" represented by R² may each be further substituted with a substituent such as an alkyl group, a hydroxy group, an amino group, and a sulfone group. As the alkyl group, an alkyl group having 1 to 4 carbon atoms is preferable, and examples thereof include a methyl group, an ethyl group, a n-propyl group, an isopropyl group, a n-butyl group, an isobutyl group, and a tert-butyl group.

R² is preferably a cycloalkyl group (preferably a cyclohexyl group), a benzyl group, a phenyl group, and a naphthyl group, more preferably a cyclohexyl group and a phenyl group, and particularly preferably a phenyl group.

In the present invention, the (meth)acrylic acid ester represented by the formula (I) is preferably cyclohexyl methacrylate, benzyl methacrylate, phenyl methacrylate, and naphthyl methacrylate, more preferably cyclohexyl methacrylate and phenyl methacrylate, and particularly preferably phenyl methacrylate.

(Meth)acrylic acid esters represented by the formula (I) may be used individually, or two or more of them may be used together.

The (meth)acrylic acid ester represented by the formula (I) is contained at a ratio of 10 to 40% by weight, based on 100% by weight of the total of the monomer component constituting the methacrylic resin. When the content of the (meth)acrylic acid ester represented by the formula (I) is less than 10% by weight, compatibility of the methacrylic resin with the aromatic polycarbonate resin deteriorates, the transparency of the resin composition and a molded article thereof deteriorates, and the weather resistance of the resin composition and a molded article thereof deteriorates. The (meth)acrylic acid ester represented by the formula (I) is preferably contained at a ratio of 15 to 30% by weight, based on 100% by weight of the total of the monomer component constituting the methacrylic resin.

As the alkyl acrylate, a commercially available product may be used as it is, or alkyl acrylate which has specially been synthesized according to a previously publicly-known method may be used.

The alkyl acrylate is not particularly limited as long as it is copolymerizable with methyl methacrylate and/or the (meth)acrylic acid ester represented by the formula (I), and examples thereof include an alkyl acrylate in which an alkyl moiety thereof has a linear or branched or cyclic alkyl group having 2 to 12 carbon atoms, for example, methyl acrylate, ethyl acrylate, n-propyl acrylate, isopropyl acrylate, butyl acrylate (n-butyl acrylate, isobutyl acrylate, tert-butyl acrylate, sec-butyl acrylate), and 2-ethylhexyl acrylate. Among them, an alkyl acrylate having an alkyl group having 1 to 4 carbon atoms is preferable, and methyl acrylate, ethyl acrylate, and butyl acrylate are more preferable.

Such alkyl acrylates may be used individually, or two or more of them may be used together.

The alkyl acrylate is contained at a ratio of 0.4 to 0.8% by weight, based on 100% by weight of the total of the monomer component constituting the methacrylic resin. By the content of the alkyl acrylate being 0.4 to 0.8% by weight, even when the upper limit temperature of a temperature range in molding is made higher, a molded article which is suppressed from generation of clouding and which has improved transparency is obtained. A molded article and a resin film obtained by molding such a resin composition are suppressed from generation of clouding, and become improved in transparency. When the content of the alkyl acrylate is less than 0.4% by weight, or more than 0.8% by weight, the transparency of the resulting molded article is not improved, in both cases. A resin composition in which the content of the alkyl acrylate is 0.4 to 0.8% by weight has a higher clouding point, and even in molding under a higher temperature condition, generation of clouding is suppressed, and it becomes possible to obtain a molded article having improved transparency, as compared with a case where the content of the alkyl acrylate in the resin composition is less than 0.4% by weight or more than 0.8% by weight. The alkyl acrylate is preferably contained at a ratio of 0.4 to 0.6% by weight, based on 100% by weight of the total of the monomer component constituting the methacrylic resin.

As the monomer component constituting the methacrylic resin, a monomer other than the methyl methacrylate, the (meth)acrylic acid ester represented by the formula (I) and the alkyl acrylate may be contained as long as the effect of the present invention is not deteriorated.

A polymerization method when the monomer component is polymerized is not particularly limited, but a publicly-known polymerization method such as bulk polymerization, solution polymerization, suspension polymerization, and emulsion polymerization can be adopted. In the polymerization, usually, a radical polymerization initiator is used, and preferably, a radical polymerization initiator and a chain transfer agent are used.

As the polymerization initiator, a radical polymerization initiator such as an azo compound such as azobisisobutyronitrile, and an organic peroxide such as lauroyl peroxide, and 1,1-di(t-butylperoxy)cyclohexane is preferably used. Such polymerization initiators may be used individually, or two or more of them may be used together. The amount of the polymerization initiator may be appropriately determined, depending on the type of the monomers and the ratio thereof.

As the chain transfer agent, mercaptans such as n-butylmercaptan, n-octylmercaptan, n-dodecylmercaptan, and 2-ethylhexyl thioglycolate are preferably used. Such chain transfer agents may be used individually, or two or more of them may be used together. The amount of the chain transfer agent may be appropriately determined, depending on the type of the monomers and the ratio thereof.

The polymerization temperature and the polymerization time when the monomer component is polymerized are not particularly limited, but they may be appropriately set, depending on the type of the monomers, and the ratio of the monomers.

The methacrylic resin has a weight average molecular weight of preferably 60,000 to 300,000, and more preferably 80,000 to 200,000. When the methacrylic resin has a weight average molecular weight in such a range, it becomes improved in flowability, and when the resin composition is produced, it is easily melted and kneaded, and processibility is improved. The transparency and the mechanical strength of the resulting resin composition and the molded article thereof are also improved.

The melt mass flow rate (MFR) of the methacrylic resin at 230°C which is measured under a load of 3.8 kg is preferably 0.1 to 50 g/10 min., and more preferably 0.2 to 30 g/10 min. When the methacrylic resin has an MFR in such a range, it becomes improved in flowability, and when the resin composition is produced, the resin becomes easy to melt-knead. The mechanical strength of the resulting resin composition and molded article is improved.

In addition to a copolymer obtained by polymerizing the monomer component, an additive such as a release agent, an ultraviolet absorber, a dye, a pigment, a polymerization inhibitor, an antioxidant, a flame retardant, and a reinforcing agent may be contained in the methacrylic resin in such a range that the effect of the present invention is not deteriorated, and a content of the copolymer based on 100 parts by weight of the whole methacrylic resin is preferably 95 to 99.995 parts by weight.

### <Aromatic polycarbonate resin>

The aromatic polycarbonate resin to be used in the present invention has a weight average molecular weight of 20,000 to 60,000. when the weight average molecular weight of the aromatic polycarbonate resin is less than 20,000, the impact resistance and the heat resistance of a molded article obtained by molding the resin composition are deteriorated. On the other hand, when the viscosity average molecular weight of the polycarbonate-based resin exceeds 40,000, compatibility with the methacrylic resin is reduced. The polycarbonate resin preferably has a weight average molecular weight of 20,000 to 40,000.

Examples of the aromatic polycarbonate resin include a resin obtained by reacting a dihydric phenol and a carbonylating agent by an interfacial polycondensation method or a melt transesterification method; a resin obtained by polymerizing a carbonate prepolymer by a solid phase transesterification method; a resin obtained by polymerizing a cyclic carbonate compound by a ring-opening polymerization method.

Examples of the dihydric phenol include hydroquinone, resorcinol, 4,4'-dihydroxydiphenyl, bis(4-hydroxyphenyl)methane, bis{(4-hydroxy-3,5-dimethyl)phenyl}methane, 1,1-bis(4-hydroxyphenyl)ethane, 1,1-bis(4-hydroxyphenyl)-1-phenylethane, 2,2-bis(4-hydroxyphenyl)propane (common name: bisphenol A), 2,2-bis{(4-hydroxy-3-methyl)phenyl}propane,
2,2-bis{(4-hydroxy-3,5-dimethyl)phenyl}propane,
2,2-bis{(4-hydroxy-3,5-dibromo)phenyl}propane,
2,2-bis{(3-isopropyl-4-hydroxy)phenyl}propane,
2,2-bis{(4-hydroxy-3-phenyl)phenyl}propane,
2,2-bis(4-hydroxyphenyl)butane, 2,2-bis(4-hydroxyphenyl)-3-methylbutane, 2,2-bis(4-hydroxyphenyl)-3,3-dimethylbutane,
2,4-bis(4-hydroxyphenyl)-2-methylbutane, 2,2-bis(4-hydroxyphenyl)pentane, 2,2-bis(4-hydroxyphenyl)-4-methylpentane,
1,1-bis(4-hydroxyphenyl)cyclohexane,
1,1-bis(4-hydoxyphenyl)-4-isopropylcyclohexane,
1,1-bis(4-hydroxyphenyl)-3,3,5-trimethylcyclohexane,
9,9-bis(4-hydroxyphenyl)fluorene
9,9-bis{(4-hydroxy-3-methyl)phenyl}fluorene,
α,α'-bis(4-hydroxyphenyl)-o-diisopropylbenzene,
α,α'-bis(4-hydroxyphenyl)-m-diisopropylbenzene,
α,α'-bis(4-hydroxyphenyl)-p-diisopropylbenzene,
1,3-bis(4-hydroxyphenyl)-5,7-dimethyladamantane,
4,4'-dihydroxydiphenylsulfone, 4,4'-dihydroxydiphenyl sulfoxide, 4,4'-dihydroxydiphenyl sulfide, 4,4'-dihydroxydiphenyl ketone, 4,4'-dihydroxydiphenyl ether, and 4,4'-dihyroxydiphenyl ester. These may be used individually, or two or more of them may be used together.

Among these dihydric phenols, bisphenol A, 2,2-bis{(4-hydroxy-3-methyl)phenyl}propane, 2,2-bis(4-hydroxyphenyl)butane, 2,2-bis(4-hydroxyphenyl)-3-methylbutane, 2,2-bis(4-hydxoxyphenyl)-3,3-dimethylbutane,
2,2-bis(4-hydroxyphenyl)-4-methylpentane,
1,1-bis(4-hydroxyphenyl)-3,3,5-trimethylcyclohexane, and α,α'-bis(4-hydroxyphenyl)-m-diisoprapylbenzene are preferable. Particularly, use of bisphenol A alone, and concurrent use of bisphenol A with at least one selected from the group consisting of 1,1-bis(4-hydroxyphenyl)-3,3,5-trimethylycyclohexane, 2,2-bis{(4-hydroxy-3-methyl)phenyl}propane, and
α,α'-bis(4-hydroxyphenyl)-m-diisopropylbenzene are preferable.

Examples of the carbonylating agent include a carbonyl halide (phosgene, etc.), a carbonate ester (diphenyl carbonate, etc.), and a haloformate (dihaloformate of dihydric phenol, etc.). These may be used individually, or two or more of them may be used together.

The melt volume rate (MVR) of the aromatic polycarbonate resin at 300°C which is measured under a load of 1.2 kg is preferably 2 to 100 cm³/10 min., and more preferably 10 to 85 cm³/10 min. When the aromatic polycarbonate resin has an MVR in such a range, it becomes to have an improved flowability, and when the resin composition is produced, the resin becomes easy to melt-knead. The mechanical strength of the resulting resin composition and molded article thereof is improved.

An additive such as a release agent, an ultraviolet absorber, a dye, a pigment, a polymerization inhibitor, an antioxidant, a flame retardant, and a reinforcing agent may be contained in the aromatic polycarbonate resin as long as the effect of the present invention is not deteriorated.

### <Resin composition>

The resin composition of the present composition comprises the methacrylic resin at a ratio of 50 to 95 parts by weight, and the aromatic polycarbonate resin at a ratio of 5 to 50 parts by weight, based on 100 parts by weight of the total of them. When the content of the aromatic polycarbonate resin is less than 5 parts by weight, the mechanical strength of a molded article obtained by molding the resin composition becomes insufficient. On the other hand, when the content of the aromatic polycarbonate resin exceeds 50 parts by weight, the transparency of the resin composition and a molded article obtained by molding is deteriorated.

The methacrylic resin is preferably contained at a ratio of 50 to 80 parts by weight, and the aromatic polycarbonate resin is preferably contained at a ratio of 20 to 50 parts by weight.

In addition to the methacrylic resin and the aromatic polycarbonate resin, a conventional additive such as an ultraviolet absorber, an antioxidant, a compatibilizer, a stabilizer, a colorant, a foaming agent, a lubricant, a release agent, an antistatic agent, a flame retardant, and a flame retardant auxiliary may be blended in the resin composition of the present invention as long as the effect of the present invention is not deteriorated. A small amount of other thermoplastic resins may also be added. These additives may be added at the time of melt-kneading of a resin mixture comprising the methacrylic resin and the aromatic polycarbonate resin, or may be added before or after melt-kneading. When the additive is added, the total content of the methacrylic resin and the aromatic polycarbonate resin based on 100 parts by weight of the total of the resin composition is preferably 70 to 99.995 parts by weight.

Examples of the ultraviolet absorber include a triazine-based ultraviolet absorber, a benzophenone-based ultraviolet absorber, a benzotriazole-based ultraviolet absorber, a benzoate-based ultraviolet absorber, and a cyanoacrylate-based ultraviolet absorber. These may be used individually, or two or more of them may be used together.

Examples of the triazine-based ultraviolet absorber include 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, and 2,4-diphenyl-6-(2-hydroxy-4-benzyloxyphenyl)-1,3,5-triazine.

Examples of the benzophenone-based UV absorbing agent include 2,4-dihydroxy-benzophenone, 2-hydroxy-4-methoxy-benzophenone, 2-hydroxy-4-n-octoxy-benzophenone, 2-hydroxy-4-dodecyloxy-benzophenone, 2-hydroxy-4-octadecyloxy-benzophenone,
2,2'-dihydroxy-4-methoxy-benzophenone,
2,2'-dihydroxy4,4'-dimethoxybenzophenone, and
2,2',4,4'-tetrahydroxy-benzophenone.

Examples of the benzotriazole-based ultraviolet absorber include 2-(2'-hydroxy-5-methylphenyl)benzotriazole,
2-(2'-hydroxy-3',5'-di-t-butylphenyl)benzotriazole,
2-(2'-hydroxy-3'-t-butyl-5'-methylphenyl)benzotriazole, 2-(2'-hydroxy-5'-methylphenyl)benzotriazole,
2-(2'-hydroxy-3',5'-di-tert-butylphenyl)benzotriazole,
2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimidomethyl)-5'-methylphenyl) benzotriazole,
2,2-methylenebis(4-(1,1,3,3-tetramethylbutyl)-6-(2H-benzotriazol-2-yl)pheno 1), 2-(2'-hydroxy-3'-tert-butyl-5'-methylphenyl)-5-chlorobenzotriazole, 2(2'-hydroxy-3',5'-di-tert-butylphenyl)-5-chlorobenzotriazole, (2(2'-hydroxy-3', 5'-di-tert-amylphenyl)-5-chlorobenzotriazole, 2(2'-hydroxy-3',5'-di-tert-butylphenyl)-5-chlorobenzotriazole, and (2(2'-hydroxy-3',5'-di-tert-amylphenyl)-5-chlorobenzotriaozle.

Examples of the benzoate-based ultraviolet absorber include 2,4-di-t-butylphenyl-3',5'-di-t-butyl-4'-hydroxybenzoate, 2,6-di-t-butylphenyl-3',5'-di-t-butyl-4'-hydroxybenzoate, n-hexadecyl-3,5-di-t-butyl-4-hydroxybenzoate, and
n-octadecyl-3,5-di-t-butyl-4-hydroxybenzoate.

Examples of the cyanoacrylate-based ultraviolet absorber include 2'-ethylhexyl-2-cyano-3,3-diphenylacrylate, and ethyl-2-cyano-3-(3',4'-methylenedioxyphenyl)acrylate.

Examples of the ultraviolet absorber include such commercially available products as "Kemisorb102" manufactured by CHEMIPRO KASEI KAISHA, LTD., and "Adekastab LAF70" manufactured by ADEKA CORPORATION as the triazine-based ultraviolet absorber, and "Adekastab LA31" manufactured by ADEKA CORPORATION as the benzotriazole-based ultraviolet absorber.

The ultraviolet absorber preferably has a weight average molecular weight of 500 to 1,000, and more preferably 550 to 700. When the weight average molecular weight is too small, the agent is easily volatilized during molding, and when the molecular weight is too large, compatibility with the methacrylic resin or the aromatic polycarbonate resin becomes easy to decrease.

The ultraviolet absorber preferably has a molar extinction coefficient at the wavelength of the absorption maximum of 10 L/mol·cm or more, and more preferably 15 L/mol·cm or more. By the molar extinction coefficient of the ultraviolet absorber being in the prescribed range, the ultraviolet absorbing ability becomes more improved, and the content of the ultraviolet absorber can be reduced.

Examples of the antioxidant include a hindered phenol-based antioxidant, a phosphorus-based antioxidant, and a sulfur-based antioxidant. These may be used individually, or two or more of them may be used together.

Examples of the hindered phenol-based antioxidant include a commercially available product such as "Irganox1010", "Irganox1035", "Irganox1076", and "Irganox1222" manufactured by Ciba-Geigy Japan Limited, "Antigene P", "Antigene 3C", "Antigene FR", "Sumilizer S", and "Sumilizer GA80" manufactured by Sumitomo Chemical Co., Ltd., and "Adekastab A070", "Adekastab A080", and "Adekastab AO503" manufactured by ADEKA CORPORATION.

Examples of the phosphorus-based antioxidant include tris(2,4-di-t-butylphenyl)phosphite, 2-[[2,4,8,10-tetrakis(1,1-dimethylethyl)dibenzo[d,f][1,3,2]dioxaphosphepin-6-yl]oxy]-N,N-bis[2-[[2,4,8,10-tetrakis(1,1-dimethylethyl)dibenzo[d,f][1,3,2]dio xaphosphepin-6-yl]oxy]-ethyl]ethanamine, diphenyltridecyl phosphite, triphenyl phosphite, 2,2-methylenebis(4,6-di-tert-butylphenyl)octyl phosphite, and bis(2,6-di-tert-butyl-4-methylphenyl)pentaerythritol diphosphite. Among them, 2,2-methylenebis(4,6-di-tert-butylphenyl)octyl phosphite is preferable.

Examples of the sulfur-based antioxidant include dimethyl disulfide, diethyl disulfide, di-n-propyl disulfide, di-n-butyl disulfide, di-sec-butyl disulfide, di-tert-butyl disulfide, di-tert-amyl disulfide, dicyclohexyl disulfide, di-tert-octyl disulfide, di-n-dadecyl disulfide, and di-tert-dodecyl disulfide. Among them, di-tert-alkyl disulfide is preferable, and di-tert-dodecyl disulfide is further preferable.

The resin composition of the present invention is obtained, for example, by melt-kneading a resin mixture comprising a methacrylic resin and an aromatic polycarbonate resin.

In order to uniformly melt-knead these resins, melt-kneading is performed usually at a shear rate of 10 to 200 sec⁻¹, and preferably at a shear rate of 30 to 150 sec⁻¹ under the temperature condition of usually 180 to 320°C, and preferably 200 to 300°C.

As an instrument to be used in melt-kneading, an ordinary mixer and kneader can be used. Specifically, examples thereof include a single screw kneading extruder, a twin screw kneading extruder, a ribbon blender, a Henschel mixer, a Banbury mixer, and a drum tumbler. Among them, the twin screw kneading extruder is preferable. Melt-kneading can be performed under an atmosphere of an inert gas such as nitrogen gas, argon gas and helium gas, as necessary.

In this way, there is obtained a resin composition capable of providing a molded article which is suppressed from generation of clouding and which has an improved transparency. The resin composition also has improved transparency. By molding the resin composition of the present invention, there is obtained a molded article which is suppressed from generation of clouding and which has an improved transparency.

### <Molded article>

The resin composition of the present invention is processed into a desired shape, and is processed into a molded article. The molded article is an article obtained by molding the resin composition. The molded article obtained by molding the resin composition of the present invention is suppressed from generation of clouding and has improved transparency. The molded article also has an improved mechanical nature.

In molding, for example, the resin composition obtained by melt-kneading the methacrylic resin and the aromatic polycarbonate resin may be used as it is, or after the resin composition is formulated into a prescribed shape such as a pellet shape, this resin composition of the prescribed shape may be used. The molding method is not particularly limited, but examples thereof include an injection molding method, a press molding method and a melt extrusion molding method.

The molded article is useful, for example, as an electro-optic material (material for lens, optical disk substrate, light-guiding plate etc.), a cover material (material for cover for display etc.), and a resin glazing material.

### <Resin film>

The resin film is a resin film obtained by molding the resin composition, and is a film-like molded article. The resin film is a film obtained by molding the resin composition. The resin film obtained by molding the resin composition of the present invention is suppressed from generation of clouding, and has an improved transparency.

The thickness of the resin film is preferably 10 to 1,000 µm, more preferably 20 to 500 µm, and further preferably 20 to 300 µm.

The method of molding the resin composition to obtain the resin film is not particularly limited, but examples thereof include a method comprising first obtaining a resin composition containing a methacrylic resin and an aromatic polycarbonate resin and, then molding the resin composition by a melt extrusion molding method, a solution casting film making method, or a heat pressing method. Among them, the melt extrusion molding method is preferable.

In the melt extrusion molding method, for example, the methacrylic resin and the aromatic polycarbonate resin are mixed first, and, if necessary, the aforementioned other components are further mixed to obtain a resin composition, then, the resulting resin composition is melt-kneaded with a single screw or twin screw extruder, the melted resin is continuously extruded from a T die into a film, and further, the film-like melted resin which has been continuously extruded from the T die is held between one pair of metal rolls having a smooth surface, and molded and cooled, and thereby, a polarizer protection film is obtained. The method of mixing the methacrylic resin, the aromatic polycarbonate resin, and if necessary, further other components is not particularly limited, but any of the publicly-known methods may be used. A super mixer or a Banbury mixer may be used. These components may be melt-kneaded with a single screw or twin screw extruder, or these extruders may be used in combination.

The resin film is preferably a single-layer film, but it may be a multi-layer film having two or more layers as long as the effect of the present invention is not deteriorated. When the resin film is a multi-layer film, layers thereof may be formed of resin compositions having the same composition, or may be formed of resin compositions having different compositions. The resin compositions having different compositions include any embodiments, such as resin compositions in which the types of the resins to be contained are different, resin compositions in which the types of resins are the same, but the contents of the individual resins are different, and resin compositions in which the types and the contents of the resins are the same, but additives are different.

The resin film can be used suitably as a polarizer protection film. The resin film can be used by laminating it on a construction daylighting member for a window and a car port roofing material, a vehicle daylighting member for a window, an agricultural daylighting material for a greenhouse, an illumination member, or a display member for a front filter, in addition to the polarizer protection film.

### <Stretched film>

The stretched film is a film obtained by stretching the resin film. Since the stretched film is a film obtained by stretching the resin film, it is suppressed from generation of clouding and has an improved transparency, like the resin film. Since the stretched film has been stretched, it has an improved mechanical nature.

Examples of stretching include uniaxial stretching and biaxial stretching. Among them, biaxial stretching is preferable.

Examples of the biaxial stretching include sequential stretching and simultaneous biaxial stretching. Examples of the stretching direction include a machine flow direction of an unstretched film (i.e. resin film), a direction orthogonal to the machine flow direction, and a direction oblique to the machine flow direction. The stretching ratio is preferably 1.1 to 3.0 times. In the present specification, the machine flow direction is defined as a longitudinal direction, stretching in this longitudinal direction is defined as longitudinal stretching, a direction orthogonal to the machine flow direction is defined as a traverse direction, and stretching in this traverse direction is defined as traverse stretching.

The stretched film may be surface-treated, and examples of the surface treatment include hard coat treatment, antiglare treatment, and antifouling treatment.

The stretched film can be used suitably as a polarizer protection film. The stretched film can be used by laminating it on a construction daylighting member for a window and a car port roofing material, a vehicle daylighting member for a window, an agricultural daylighting material for a greenhouse, an illumination member, or a display member for a front filter, in addition to the polarizer protection film.

### <Polarizing plate>

The resin film or the stretched film can be disposed as the polarizer protection film on at least one surface of a polarizer to obtain a polarizing plate. Such a polarizing plate comprises a polarizer, and a polarizer protection film to be disposed on at least one surface of the polarizer. The polarizer protection film and the polarizer are preferably stuck.

The polarizer can be a polarizer which is manufactured by performing a step of uniaxially stretching a polyvinyl alcohol-based resin film, a step of dyeing the polyvinyl alcohol-based resin film with a dichroic dye, thereby adsorbing the dichroic dye, a step of treating the polyvinyl alcohol-based resin film onto which the dichroic dye has been adsorbed, with an aqueous boric acid solution, and a step of washing the film with water after treatment with the aqueous boric acid solution, according to publicly-known methods. The thus obtained polarizer has an absorption axis in the uniaxially stretched direction.

As the polyvinyl alcohol-based resin, a resin obtained by saponifying a polyvinyl acetate-based resin can be used. Examples of the polyvinyl acetate-based resin include a copolymer of vinyl acetate and a different monomer copolymerizable therewith, in addition to polyvinyl acetate which is a homopolymer of vinyl acetate. Examples of the different monomer copolymerizable with vinyl acetate include unsaturated carboxylic acids, olefins, vinyl ethers, unsaturated sulfonic acids, and acrylamides having an ammonium group.

The degree of saponification of the polyvinyl alcohol-based resin is preferably 85 to 100 mol%, and more preferably 98 mol% or more. The polyvinyl alcohol-based resin may be modified, and for example, polyvinyl formal or polyvinyl acetal which has been modified with aldehydes can also be used. The degree of polymerization of the polyvinyl alcohol-based resin is preferably 1,000 to 10,000, and more preferably 1,500 to 5,000.

Such a polyvinyl alcohol-based resin is formed into a film, and this is used as a preliminary film for the polarizer. The method of forming the polyvinyl alcohol-based resin into a film is not particularly limited, but a publicly-known method is adopted. The thickness of the polyvinyl alcohol-based raw film is preferably 10 to 150 µm.

Uniaxial stretching of the polyvinyl alcohol-based resin film can be performed before dyeing with the dichroic dye, simultaneously with dyeing, or after dyeing. When uniaxial stretching is performed after dyeing, this uniaxial stretching may be performed before boric acid treatment or during boric acid treatment. Alternatively, uniaxial stretching can also be performed at a plurality of stages of them.

Uniaxial stretching may be performed by passing the film between separate rolls having different circumferential rates, or may be performed by holding the film with heat rolls. This uniaxial stretching may be dry stretching in which stretching is performed in the atmospheric air, or may be wet stretching in which the polyvinyl alcohol-based resin film is stretched in the state where the film is swollen using water or a solvent such as an organic solvent. The stretching ratio is preferably 3 to 8 times.

Dyeing of the polyvinyl alcohol-based resin film with the dichroic dye can be performed, for example, by a method of immersing the polyvinyl alcohol-based resin film in an aqueous solution containing the dichroic dye. As the dichroic dye, iodine or a dichroic organic dyestuff is used. It is preferable that the polyvinyl alcohol-based resin film be subjected to treatment of immersion in water before dyeing treatment.

When iodine is used as the dichroic dye, usually, a method of immersing the polyvinyl alcohol-based resin film in an aqueous solution containing iodine and potassium iodide to dye the film is adopted. The content of iodine in this aqueous solution is preferably 0.01 to 1 part by weight per 100 parts by weight of water, and the content of potassium iodide is preferably 0.5 to 20 parts by weight per 100 parts by weight of water. The temperature of the aqueous solution to be used in dyeing is preferably 20 to 40°C. The time for immersion in this aqueous solution (dyeing time) is preferably 20 to 1,800 seconds.

Meanwhile, when the dichroic organic dyestuff is used as the dichroic dye, usually, a method of immersing the polyvinyl alcohol-based resin film in an aqueous solution containing a water-soluble dichroic organic dyestuff to dye the film is adopted. The content of the dichroic organic dyestuff in this aqueous solution is preferably 0.0001 to 10 parts by weight, and more preferably 0.001 to 1 part by weight per 100 parts by weight of water. This aqueous solution may contain an inorganic salt such as sodium sulfate as a dyeing aid. The temperature of the aqueous dichroic dye solution used in dyeing is preferably 20 to 80°C. The time for immersion in this aqueous solution (dyeing time) is preferably 10 to 1,800 seconds.

Boric acid treatment after dyeing with the dichroic dye can be performed by a method of immersing the dyed polyvinyl alcohol-based resin film in a boric acid-containing aqueous solution. The amount of boric acid in the boric acid-containing aqueous solution is preferably 2 to 15 parts by weight, and more preferably 5 to 12 parts by weight per 100 parts by weight of water. When iodine is used as the dichroic dye, it is preferable that this boric acid-containing aqueous solution contain potassium iodide. The amount of potassium iodide in the boric acid-containing aqueous solution is preferably 0.1 to 15 parts by weight, and more preferably 5 to 12 parts by weight per 100 parts by weight of water. The time for immersion in the boric acid-containing aqueous solution is preferably 60 to 1,200 seconds, more preferably 150 to 600 seconds, and further preferably 200 to 400 seconds. The temperature of the boric acid-containing aqueous solution is preferably 50°C or higher, more preferably 50 to 85°C, and further preferably 60 to 80°C.

The polyvinyl alcohol-based resin film after boric acid treatment is usually treated by washing with water. Treatment by washing with water is performed, for example, by immersing the boric acid-treated polyvinyl alcohol-based resin film in water. The temperature of water in treatment by washing with water is preferably 5 to 40°C.

The immersion time is preferably 1 to 120 seconds.

After washing with water, drying treatment is performed to obtain a polarizer. Drying treatment can be performed by using a hot air dryer or a far infrared heater. The temperature of drying treatment is preferably 30 to 100°C, and more preferably 50 to 80°C. The time for drying treatment is preferably 60 to 600 seconds, and more preferably 120 to 600 seconds.

By drying treatment, the moisture percentage of the polarizer is reduced to such an extent that no problems on practical use are raised. The moisture percentage is preferably 5 to 20% by weight, and more preferably 8 to 15% by weight. When the moisture percentage is below 5% by weight, the flexibility of the polarizer is lost, and the polarizer can be damaged, or fractured after the drying. On the other hand, when the moisture percentage exceeds 20% by weight, heat stability of the polarizer can be insufficient.

The thickness of the thus obtained polarizer on which the dichroic dyes are adsorbed and oriented is preferably 5 to 40 µm.

When the polarizer protection film is disposed on one surface of the polarizer, a transparent film may be disposed on the other surface. It is preferable that the transparent resin film and the polarizer be stuck, as in the case of the polarizer protection film and the polarizer. Examples of the transparent resin film include a triacetylcellulose film, a polycarbonate film, a polyethylene terephthalate film, an acryl-based resin film, a laminated film of an acryl-based resin and a polycarbonate-based resin, and an olefin-based resin film.

It is preferable to use an adhesive in sticking the polarizer protection film and the polarizer, and sticking the polarizer and the transparent resin film. By using the adhesive, the polarizer protection film and the polarizer, or the polarizer and the transparent resin film are stuck via an adhesive layer. It is preferable to subject at least one of sticking surfaces to corona discharge treatment, plasma irradiation treatment, electron beam irradiation treatment, or other surface activating treatment prior to sticking.

The adhesive for forming the adhesive layer can be arbitrarily selected from adhesives manifesting an adhering force to each member, and can be used. Typically, examples thereof include a water-based adhesive, that is, an adhesive in which adhesive components have been dissolved in water, or adhesive components have been dispersed in water, and an active energy ray curable adhesive comprising a component which is cured by irradiation with an active energy ray. Among them, from a viewpoint of productivity, the active energy ray curable adhesive is preferable.

Examples of the water-based adhesive include a composition using a polyvinyl alcohol-based resin or a urethane resin as a main component, as a preferable adhesive.

When the polyvinyl alcohol-based resin is used as a main component of the water-based adhesive, examples of the polyvinyl alcohol-based resin include a modified polyvinyl alcohol-based resin such as carboxyl group-modified polyvinyl alcohol, acetoacetyl group-modified polyvinyl alcohol, methylol group-modified polyvinyl alcohol, and amino group-modified polyvinyl alcohol, in addition to partially saponified polyvinyl alcohol and completely saponified polyvinyl alcohol. When the polyvinyl alcohol-based resin is used as the adhesive component, the adhesive is prepared as an aqueous solution of the polyvinyl alcohol-based resin, in many cases. The concentration of the polyvinyl alcohol-based resin in an aqueous adhesive solution is preferably 1 to 10 parts by weight, and more preferably 1 to 5 parts by weight, based on 100 parts by weight of water.

It is preferable to add a curable component or a crosslinking agent such as glyoxal and a water-soluble epoxy resin to the water-based adhesive containing the polyvinyl alcohol-based resin as a main component, in order to improve adhesiveness. Examples of the water-soluble epoxy resin include a polyamide polyamine epoxy resin obtained by reacting epichlorohydrin with polyamide polyamine obtained by reacting polyalkylene polyamine such as diethylenetriamine and triethylenetetramine and dicarboxylic acid such as adipic acid. As the polyamide polyamine epoxy resin, a commercially available product may be used, and examples thereof include "Sumirez Resin 650" and "Sumirez Resin 675" manufactured by Sumika Chemtex Co., Ltd., and "WS-525" manufactured by JAPAN PMC CORPORATION. The addition amount of these curable components or crosslinking agents is preferably 1 to 100 parts by weight, and more preferably 1 to 50 parts by weight, based on 100 parts by weight of the polyvinyl alcohol-based resin. In some cases, when the addition amount is small, the adhesiveness improving effect is reduced, and on the other hand, when the addition amount is large, the adhesive layer can become brittle.

When the urethane is used as a main component of the water-based adhesive, examples of an appropriate adhesive composition include a mixture of a polyester-based ionomer-type urethane resin and a compound having a glycidyloxy group. The polyester-based ionomer-type urethane resin mentioned herein is a urethane resin having a polyester skeleton, in which a small amount of an ionic component (hydrophilic component) has been introduced therein. Since the ionomer-type urethane resin is directly emulsified in water to become an emulsion without using an emulsifier, it is preferable as the water-based adhesive.

When the active energy ray curable adhesive is used, examples of a component constituting it, which is cured by irradiation with an active energy ray (hereinafter, simply referred to as "curable component" in some cases), include an epoxy compound, an oxetane compound, and an acryl-based compound. When a cation polymerizable compound such as the epoxy compound and the oxetane compound is used, a cation polymerization initiator is blended. Meanwhile, when a radical polymerizable compound such as the acryl-based compound is used, a radical polymerization initiator is blended. Among them, an adhesive containing the epoxy compound as one of curable components is preferable, and an adhesive containing an alicyclic epoxy compound in which an epoxy group is directly bound to a saturated carbocyclic ring, as one of curable components, is more preferable. The oxetane compound may be used concurrently with it.

As the epoxy compound, a commercially available product may be used, and examples thereof include "EPIKOTE" series manufactured by Japan Epoxy Resins Co., Ltd., "EPICLON" series manufactured by DIC Corporation, "Epototo" series manufactured by Toto Kasei Co., Ltd., "Adeka Resin" series manufactured by ADEKA CORPORATION, "Denacol" series manufactured by Nagase ChemteX Corporation, "DOW Epoxy" series manufactured by The Dow Chemical Company, and "TEPIC" manufactured by Nissan Chemical Industries, Ltd.

As the alicyclic epoxy compound in which an epoxy group is directly bound to a saturated carbocyclic ring, a commercially available product may be used, and examples thereof include, "CELLOXIDE" series and "CYCLOMER" series manufactured by Daicel Corporation, and "Cyracure" series manufactured by The Dow Chemical Company.

As the oxetane compound, a commercially available product may be used, and examples thereof include "ARON OXETANE" series manufactured by Toagosei Co., Ltd., and "ETERNACOLL" series manufactured by Ube Industries, Ltd.

As the cation polymerization initiator, a commercially available product may be used, and examples thereof include "KAYARAD" series manufactured by Nippon Kayaku Co., Ltd., "Cyracure" series manufactured by Union Carbide Corporation, "CPI" series which is a photoacid generator, manufactured by San-Apro Ltd., "TAZ", "BBI" and "DTS" which are a photoacid generator, manufactured by Midori Kagaku Co., Ltd., "Adekaoptomer" series manufactured by ADEKA CORPORATION, and "RHODORSIL" series manufactured by Rhodia company.

The active energy ray curable adhesive can contain a photosensitizer, as necessary. By using the photosensitizer, reactivity is improved, and the mechanical strength and the adhesion strength of a cured product layer can be further improved. Examples of the photosensitizer include a carbonyl compound, an organic sulfur compound, a persulfide, a redox compound, azo and diazo compounds, an anthracene-based compound, a halogen compound, and a photo-reductive dye.

Various additives can be blended into the active energy ray curable adhesive in such a range that adhesiveness thereof is not deteriorated. Examples of the additive include an ion trapping agent, an antioxidant, a chain transfer agent, a tackifier, a thermoplastic resin, a filler, a flowability controlling agent, a plasticizer, and an anti-foaming agent. A curable component which is cured by a different reaction mechanism from that of cation polymerization can also be further blended, in such a range that adhesiveness thereof is not deteriorated.

The active energy ray curable adhesives explained above may have the same composition, or may have different compositions, and it is preferable to concurrently perform irradiations of an active energy ray for curing both of them.

Examples of the active energy ray include X-ray, ultraviolet ray, and visible ray. Among them, from a viewpoint of ease of utilization, as well as ease of preparation of the active energy ray curable adhesive, stability and curing performance, the ultraviolet ray is preferable. Examples of a light source of the ultraviolet ray include a low pressure mercury lamp, a medium pressure mercury lamp, a high pressure mercury lamp, an ultrahigh pressure mercury lamp, a chemical lamp, a black light lamp, a microwave-excited mercury lamp, and a metal halide lamp.

The thickness of the adhesive layer obtained by using the active energy ray curable adhesive is preferably 1 to 50 µm, and more preferably 1 to 10 µm.

The polarizing plate can be stuck to a liquid crystal cell to obtain a liquid crystal panel used in a liquid crystal display device. It is preferable that the polarizing plate and the liquid crystal cell be stuck via a pressure-sensitive adhesive layer using a pressure-sensitive adhesive. It is general that this pressure-sensitive adhesive layer is formed by an acryl-based pressure-sensitive adhesive containing an acrylic acid ester as a main component, and an acrylic resin obtained by copolymerizing a functional group-containing acryl-based monomer, as a pressure-sensitive adhesive component. The liquid crystal panel in which the polarizing plate is stuck to the liquid crystal cell via a pressure-sensitive adhesive layer can be used in a liquid crystal display device.

### EXAMPLES

The present invention will be specifically illustrated below by way of Examples and Comparative Examples, but the present invention is not limited to these Examples.

Physical properties of the resulting resin composition and molded article were measured and assessed by the following methods.

### <Clouding point>

A resin composition was dried at 90°C for 12 hours, and press-molded at a press temperature of 220°C using a press molding machine ("Shindo model ASF hydraulic press" manufactured by SHINTO Metal Industries Corporation), to obtain molded pieces having a thickness of 3 mm. Then, the resulting molded pieces were press-molded at press temperatures of 270°C, 275°C, 280°C, 285°C and 290°C, to obtain test pieces, each of which had a thickness of 2 mm and was of 40 mm square. The appearance of each of the resulting test pieces was visually assessed, and among press temperatures at which a transparent test piece having no clouding was obtained, the highest press temperature was adopted as the clouding point of the resin composition.

### <Appearance>

Concerning the resulting molded article, appearance was visually assessed. A molded article which had no clouding and was transparent was judged as ○, a molded article which has partial clouding and is semitransparent was judged as Δ, and a molded article which has total clouding and is opaque was judged as x.

### (Synthesis Examples 1 to 12: Synthesis of methacrylic resin)

Methyl methacrylate (MMA), cyclohexyl methacrylate (CHMA) and methyl acrylate (MA) were mixed at a composition shown in Table 1, to obtain a monomer component. To this monomer component were added lauryl peroxide as a polymerization initiator at 0.2 part by weight relative to the sum total of the monomer component, and 1-dodecylmercaptan as a chain transfer agent at 0.41 part by weight relative to the sum total of the monomer component, to dissolve them. Separately, 0.05 part by weight of sodium polyacrylate, 0.24 part by weight of anhydrous sodium primary phosphate and 0.28 part by weight of sodium secondary phosphate heptahydrate as a suspension stabilizer were dissolved in 100 parts by weight of ion-exchanged water to obtain a suspension polymerization aqueous phase, 150 parts by weight of the aqueous phase was added to 100 parts by weight of the monomer component, and suspension polymerization was performed. The resulting slurry-like reaction liquid was dehydrated with a dehydrator, washed, and dried to obtain a bead-like methacrylic resin.

**[Table 1]**

| Kind | MMA | CHMA | MA |
|---|---|---|---|
| | (wt%) | (wt%) | (wt%) |
| Synthesis Example 1 | 79.60 | 20.00 | 0.40 |
| Synthesis Example 2 | 79.50 | 20.00 | 0.50 |
| Synthesis Example 3 | 79.40 | 20.00 | 0.60 |
| Synthesis Example 4 | 79.25 | 20.00 | 0.75 |
| Synthesis Example 5 | 80.60 | 19.00 | 0.40 |
| Synthesis Example 6 | 80.50 | 19.00 | 0.50 |
| Synthesis Example 7 | 80.40 | 19.00 | 0.60 |
| Synthesis Example 8 | 78.60 | 21.00 | 0.40 |
| Synthesis Example 9 | 78.50 | 21.00 | 0.50 |
| Synthesis Example 10 | 78.40 | 21.00 | 0.60 |
| Synthesis Example 11 | 79.75 | 20.00 | 0.25 |
| Synthesis Example 12 | 79.00 | 20.00 | 1.00 |

### (Synthesis Examples 13 to 14: Synthesis of methacrylic resin)

According to the same manner as that of Synthesis Examples 1 to 12 except that CHMA was changed to phenyl methacrylate (PhMA), the addition amount of 1-dodecylmercaptan was 0.30 part by weight based on a sum of the monomer component, and further, a composition of MMA, PhMA and MA was as shown in Table 2, a bead-like methacrylic resin was obtained.

**[Table 2]**

| Kind | MMA | PhMA | MA |
|---|---|---|---|
| | (wt%) | (wt%) | (wt%) |
| Synthesis Example 13 | 79.50 | 20.00 | 0.50 |
| Synthesis Example 14 | 79.30 | 20.00 | 0.70 |

### (Examples 1 to 10, Comparative Examples 1 to 2: Preparation of resin composition)

Seventy parts by weight of each methacrylic resin shown in Table 3 (Synthesis Examples 1 to 12), and 30 parts by weight of Calibre301-40 (manufactured by Sumika Styron Polycarbonate Limited, weight average molecular weight (Mw)=31,000, MVR=40 cm³/10 min.) as aromatic polycarbonate (PC) were mixed, and melt-kneaded at a rotation speed of 60 rpm and a cylinder temperature of 240°C using a single screw kneading extruder ("Labo Plastomill" manufactured by Toyo Seiki Seisaku-Sho, Ltd.). The melt was extruded into a strand, cooled, and cut with a strand cutter to obtain a pellet-like resin composition. Concerning each of the resulting resin compositions, the results of measurement of a clouding point are shown in Table 3.

### (Examples 1 to 10, Comparative Examples 1 to 2: Preparation of molded article)

Each of the resulting resin compositions (Examples 1 to 10, Comparative Examples 1 to 2) was dried at 90°C for 12 hours, and press-molded at a press temperature of 220°C using a press molding machine ("Shindo model ASF hydraulic press" manufactured by SHINTO Metal Industries Corporation), to obtain molded pieces having a thickness of 3 mm. Then, the resulting molded pieces were press-molded at press temperatures of 270°C, 275°C and 280°C, to obtain molded articles, each of which had a thickness of 2 mm and was of 40 mm square. Concerning each of the resulting molded articles, the results of assessment of appearance are shown in Table 3.

**[Table 3]**

| | Resin composition | | | | | Molded article | | |
|---|---|---|---|---|---|---|---|---|
| | Methacrylic resin | | | | Clouding point | Appearance | | |
| | Kind | MMA | CHMA | MA | | | | |
| | | (wt%) | (wt%) | (wt%) | (°C) | 270°C | 275°C | 280°C |
| Example 1 | Synthesis Example 1 | 79.60 | 20.00 | 0.40 | 270 | ○ | Δ | × |
| Example 2 | Synthesis Example 2 | 79.50 | 20.00 | 0.50 | 275 | ○ | ○ | Δ |
| Example 3 | Synthesis Example 3 | 79.40 | 20.00 | 0.60 | 280 | ○ | ○ | ○ |
| Example 4 | Synthesis Example 4 | 79.25 | 20.00 | 0.75 | 270 | ○ | Δ | × |
| Example 5 | Synthesis Example 5 | 80.60 | 19.00 | 0.40 | 275 | ○ | ○ | Δ |
| Example 6 | Synthesis Example 6 | 80.50 | 19.00 | 0.50 | 280 | ○ | ○ | ○ |
| Example 7 | Synthesis Example 7 | 80.40 | 19.00 | 0.60 | 270 | ○ | Δ | × |
| Example 8 | Synthesis Example 8 | 78.60 | 21.00 | 0.40 | 270 | ○ | Δ | × |
| Example 9 | Synthesis Example 9 | 78.50 | 21.00 | 0.50 | 280 | ○ | ○ | ○ |
| Example 10 | Synthesis Example 10 | 78.40 | 21.00 | 0.60 | 275 | ○ | ○ | Δ |
| Comparative Example 1 | Synthesis Example 11 | 79.75 | 20.00 | 0.25 | 270 | ○ | × | × |
| Comparative Example 2 | Synthesis Example 12 | 79.00 | 20.00 | 1.00 | 270 | ○ | × | × |

### (Examples 11 to 12: Preparation of resin composition)

Seventy parts by weight of each methacrylic resin shown in Table 4 (Synthesis Examples 13 to 14), and 30 parts by weight of Calibre301-40 (manufactured by Sumika Styron Polycarbonate Limited, weight average molecular weight (Mw)=31,000, MVR=40 g/10 min.) as aromatic polycarbonate (PC) were mixed, melt-kneaded at a rotation speed of 60 rpm and a cylinder temperature of 240°C using a single screw kneading extruder ("Labo Plastomill" manufactured by Toyo Seiki Seisaku-Sho, Ltd.). The melt was extruded into a strand, cooled, and cut with a strand cutter to obtain a pellet-like resin composition. Concerning the resulting resin composition, the results of measurement of a clouding point are shown in Table 4.

### (Examples 11 to 12: Preparation of molded article)

Each of the resulting resin compositions (Examples 11 to 12) was dried at 90°C for 12 hours, and press-molded at a press temperature of 220°C using a press molding machine ("Shindo model ASF hydraulic press" manufactured by SHINTO Metal Industries Corporation), to obtain molded pieces having a thickness of 3 mm. Then, the resulting molded pieces were press-molded at press temperatures of 270°C, 280°C and 290°C, to obtain molded articles, each of which had a thickness of 2 mm and was of 40 mm square. Concerning each of the resulting test pieces, the results of assessment of appearance are shown in Table 4.

**[Table 4]**

| | Resin composition | | | | | Molded article | | |
|---|---|---|---|---|---|---|---|---|
| | Methacrylic resin | | | | Clouding point | Appearance | | |
| | Kind | MMA | PhMA | MA | | | | |
| | | (wt%) | (wt%) | (wt%) | (°C) | 270°C | 280°C | 290°C |
| Example 11 | Synthesis Example 13 | 79.50 | 20.00 | 0.50 | >290 | ○ | ○ | ○ |
| Example 12 | Synthesis Example 14 | 79.30 | 20.00 | 0.70 | >290 | ○ | ○ | ○ |

## Claims

1. A resin composition comprising a methacrylic resin and an aromatic polycarbonate resin,
wherein the methacrylic resin is a resin obtained by polymerizing a monomer component comprising 59 to 90% by weight of methyl methacrylate, 10 to 40% by weight of a (meth)acrylic acid ester represented by the following formula (I): 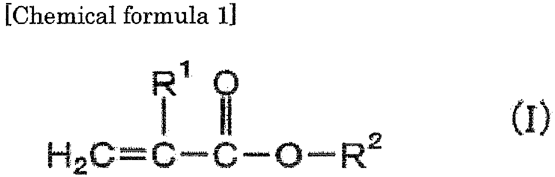
wherein R¹ represents a hydrogen atom or a methyl group, and R² represents an alkyl group substituted with a cycloalkyl group, a cycloalkyl group, a cycloalkyl group substituted with an alkyl group, an alkyl group substituted with a phenyl group, a phenyl group, a phenyl group substituted with an alkyl group, an alkyl group substituted with a naphthyl group, a naphthyl group, a naphthyl group substituted with an alkyl group, a dicyclopentanyl group or a dicyclopentenyl group,
and 0.4 to 0.8% by weight of alkyl acrylate, based on 100% by weight of the total of the monomer component,
the weight average molecular weight of the aromatic polycarbonate resin is 20,000 to 60,000, and
the content of the methacrylic resin is 50 to 95 parts by weight, and the content of the aromatic polycarbonate resin is 5 to 50 parts by weight, based on 100 parts by weight of the total of the methacrylic resin and the aromatic polycarbonate resin.

2. The resin composition according to claim 1, wherein the (meth)acrylic acid ester represented by the formula (I) is at least one selected from the group consisting of cyclohexyl methacrylate, benzyl methacrylate, phenyl methacrylate and naphthyl methacrylate.

3. The resin composition according to claim 1 or 2, wherein the alkyl acrylate is at least one selected from the group consisting of methyl acrylate, ethyl acrylate and butyl acrylate.

4. A molded article obtained by molding the resin composition according to any one of claims 1 to 3.

5. A resin film obtained by molding the resin composition according to any one of claims 1 to 3.

6. A stretched film obtained by stretching the resin film according to claim 5.

7. A polarizer protection film comprising the resin film according to claim 5.

8. A polarizer protection film comprising the stretched film according to claim 6.

9. A polarizing plate comprising a polarizer, and the polarizer protection film according to claim 7 or 8 to be disposed on at least one surface of the polarizer.
